# EUROPEAN PATENT SPECIFICATION

(11) **EP 3 029 165 B1**
(45) Date of publication and mention of the grant of the patent: **03.04.2019**
(21) Application number: 13890331.5
(22) Date of filing: 30.07.2013
(51) Int. Cl.: C22B 9/04, C22B 11/00, F27D 99/00, C22B 9/02, C22B 11/02, F27B 5/04, F27B 5/06

(54) **METHOD FOR SEPARATING GOLD-SILVER ALLOYS BY VACUUM DISTILLATION AND DEVICE FOR REALIZATION THEREOF**
VERFAHREN ZUR TRENNUNG VON GOLD-SILBER-LEGIERUNGEN MITTELS VAKUUMDESTILLATION UND VORRICHTUNG ZUR DURCHFÜHRUNG DAVON
PROCÉDÉ DE SÉPARATION D'ALLIAGES D'OR ET D'ARGENT PAR DISTILLATION SOUS VIDE ET DISPOSITIF DE MISE EN OEUVRE

(43) Date of publication of application: 08.06.2016
(73) Proprietor: IKOI S.P.A., 36022 Cassola (VI) (IT)
(72) Inventor: KHLEBNIKOV, Aleksandr Igorevich, 620089 Ekaterinburg (RU); BOROVKOV, Denis Anatolevich, Nignii Tagil 622042 (RU); GROKHOVSKII, Sergei Viktorovich, Ekaterinburg 620027 (RU); MEDVEDEV, Sergei Vladimirovich, Moscow 125047 (RU)
(74) Representative: Cosenza, Simona
(86) International application number: PCT/RU2013/000653
(87) International publication number: WO 2015/016732

(56) References cited:
- WO-A1-2013/107644
- CN-A- 102 676 828
- RU-A- 94 030 847
- RU-C2- 2 324 747
- RU-U1- 9 449
- RU-U1- 9 449
- US-A- 4 027 861

## Description

The invention relates to non-ferrous metallurgy and to the metallurgy of precious metals, in particular to separation technology for gold-silver alloys and mixtures using a vacuum distillation method for producing metals of high purity.

The document WO 2013/107644 discloses a process and an apparatus for vacuum distillation of high-purity magnesium. A starting material in the form of a magnesium-containing metal melt is present together with the upper region of a condensation vessel in the upper region of a retort heated by the external heating element, and the steam enters the upper region of the condensation vessel through the orifice below the cover which provides protection from unwanted ingress of contaminated magnesium melt, and is heated in the lower region of the retort which is heated by a second heating element, below the line corresponding to the melting point isotherm of magnesium to give the high-purity magnesium melt in the lower region of the condensation vessel.

A vacuum distillation method for rough gold is known (see abstract of the dissertation to apply for a doctorate in technical sciences, register no. 669.21'22-982 (043.3) by K.D. Polinovsky, Almaty, 1998) at a distillation temperature of 1,250°C and a residual gas pressure of 20 Pa. Thus a high (between 78% and 97%) extraction of silver into the condensate is achieved.

The shortcoming of the known method is:
- a low intensity of the condensation process of the silver at a residual gas pressure of 20 Pa;
- the chamber in which the basic evaporator is arranged is separated from the condensation chamber only by a partition without any additional devices (head or heads) that direct the vapour-gas flow from the evaporation chamber to the condensation chamber, which does not prevent the vapour-gas flow from moving out of the condensation chamber back into the evaporation chamber, thus equalizing the pressure of the saturated vapours in both chambers, which results in a decrease in the intensity of the condensation process and the accuracy of the substance separation.

Technically most pertinent is a method for separating (purifying) metals by vacuum distillation (see the article "On the issue of obtaining particularly pure metals at nanocrystal level (state)" by A.N. Poryadin and A.M. Anasov. Notifications by Tomsk Polytechnic 2012, vol. 320 No. 2, p.114-119), wherein the initial raw material is heated in a melting crucible to a working temperature at which the volatile components are evaporated from the surface of the melt, the vapour-gas mixture is fed through the vapour pipe into the area where the cooled condenser is arranged, the vapour phase is transformed into a solid or liquid state and condenses. The technical process can be carried out in a high vacuum.

The shortcoming of the known method is:
∘ During separation of gold and silver from the gold-silver alloys the heat emission of the crucible with the melt into the environment (without a protective ceramic screen) is so significant that during build-up of the predetermined process temperature and its maintenance in the process of vacuum distillation, condensate is formed in very insignificant amounts on the water-cooled condenser for an extended amount of time.
∘ Due to the thermal effect of the large specific surface area of the melt surface on the water-cooled condenser (although the condenser is arranged at a significant distance from the molten metal surface), almost no crystal nucleation centres are formed on the surface of the water-cooled condenser and there is no condensation process because of the overheated metal vapours which are replenished with new batches of overheated vapour.

An apparatus for vacuum separation of titanium sponge is known (see RU Patent 2258755, International Patent Classification C22B34/12, C22B9/04, application date March 10, 2004, published August 20, 2005) including a boiler reactor with a bottom outlet and a double bottom, which is closed by a lid with a central outlet closed by an easily fusing plug, a boiler condenser with a bottom outlet with a plug, a caisson with a water distributor, a heat screen with an easily fusing plug, characterised in that it is additionally provided with a metal head rigidly fixed in the central outlet of the lid under the easily fusing plug and formed as a truncated cone with its smaller base oriented towards the easily fusing plug, with inlet and outlet openings, a metal shell arranged in the bottom outlet of the boiler condenser and rigidly connected to the plug, and a sealing lid rigidly fixed to the upper part of the caisson, under which the bottom outlet of the boiler condenser and the water distributor are arranged.

The shortcoming of the known apparatus is that for executing the process of vacuum separation of sponge titanium (4,3 t) the assembly must be set up and dismantled, which makes its exploitation process more complicated. Additionally the cone head is made of metal, and during induction heating it can melt, thus the condensation process will not occur.

Technically most pertinent is an apparatus for pouring and separating metals by vacuum distillation (see Application 94030847, application date August 19, 1994, publication date June 27, 1996, International Patent Classification C21C7/10) including a cylindrical body connected to a vacuum pump in which there are arranged: a melting crucible with a heating element, a condenser with an entrainment separator and a crystalliser with an ingot mould, the heating element is formed as an induction coil, the winding of which is arranged around the crucible and connected to a high-frequency current generator, the crucible is arranged in a housing so that it can rotate around an axis parallel to the housing axis or around the housing axis and has a tilting mechanism, the condenser is provided with several entrainment separators distributed in the same plane on a holder arranged on a shaft under the crucible, wherein the entrainment separators of the condenser and the ingot moulds of the crystalliser are arranged on holders equally spaced from each other and from the holder shafts, while the distance from the entrainment separator axes to the axis of the shaft of their holder is equal to the distance from the axis of the crucible to the axis of the shaft of the holder of the entrainment separators, moreover the condenser and the crystalliser are provided with mechanisms to rotate the holders arranged outside the housing and connected to the shafts of these holders.

The shortcoming of the known apparatus is the low performance of said device. Without an additional cone head and protective screens the vapour flow impinges not only on the condenser entrainment separators but also on the chamber walls, which makes the collecting of the sublimates and their separation into metal types evaporated in the process extremely difficult. The crucible stands in the induction coil without any protective screening or ceramic filling (to reduce the heat loss during melting and to carry out vacuum distillation); this results in large heat loss and the necessity to spend a large amount of electrical energy on the heating and melting of the metals.

The task to be solved by the technical solutions according to the invention is the development of an ecologically clean method for a highly effective separation of gold and silver from gold-silver alloys by vacuum distillation with a high intensity level and an apparatus for the realisation of this method, which allows an increase in the speed and effectivity of the process of condensing silver by forming a large number of crystal nucleation centres, due to the creation of a high pressure of the vapour-gas vapours in the silver condensation area and the localisation of the condensation area itself.

The task relating to the method is solved in that in a method for separating gold-silver alloys by vacuum distillation comprising the heating of the initial raw material in a high vacuum to metal evaporation temperature, evaporating and condensing the metals from the vapour-gas mixture in the area of the cooled condenser, the condensation of the metals from the vapour-gas mixture is carried out in the area of the cooled condenser, additionally restricted by an installed restricting screen during directed movement of the vapour-gas mixture flow from the crucible into the condensation zone, which is formed by an additionally installed cone head arranged above the crucible, increasing the pressure of the vapour-gas mixture, in accordance with the equation:
T_{c} < Tₘ, wherein
T_{c} is the condensation temperature, and
Tₘ is the melting temperature of the metal to be precipitated.

The condensation of the metals from the vapour-gas mixture occurring in the area of the cooled condenser restricted by the additionally installed restricting screen makes it possible to reduce the metal loss.

The restricted area of the cooled condenser in which the condensation of the metals from the vapour-gas mixture occurs is formed by additional protective screens reducing the emission of the vapour-gas mixture into the environment, the heat emission of the heated crucible with the melt into the environment is significantly reduced, which during the build-up of the predetermined temperature and its maintenance during the vacuum distillation process allows a rapid growth of condensate on the water-cooled condenser, which results in an increase in the intensity of the separation of gold and silver from the gold-silver alloys.

The vapour-gas mixture reaches the restricted area of the cooled condenser for metal condensation in a strictly directed flow of the vapour-gas mixture from the crucible into the condensation zone, whereby the pressure of the vapour-gas mixture is raised.

In this, the following temperature relation is observed:
T_{c} < Tₘ, wherein
T_{c} is the condensation temperature, and
Tₘ is the melting temperature of the metal to be precipitated.

The created conditions facilitate the occurrence of a significant number of crystal nucleation centres.

The method works as follows. The initial material, a gold-silver alloy with a silver content of 1 to 90%, is fed into a graphite crucible. Subsequently, discharging takes place by means of the vacuum system to (1-6) ·10⁻⁴ mm of the mercury. Further the graphite crucible is heated to a temperature of 1220-1450°C and the cone head is heated to t = 900-1200°C, and the vacuum distillation process takes place. In the distillation process the metals (silver) condense from the vapour phase into the shape of hard metal particles on the cooled condenser.

### Example:

Gold alloy scraps were used as the initial material after pre-melting from placer gold containing 68.27% Au, 29.15% Ar, 0.15% Pt, 0.07% Pd, 0.01% Ir, and 2.35% other additives. The weight was 10268 g.

The initial material was heated to 1380°C. The vacuum was 6·10⁻⁴ to 8·10⁻⁵ mm of the mercury column. The duration of the vacuum distillation was 42 minutes.

The chemical analysis of the gold ingot was: 98.42% Au, 1.26% Ag, 0.14% Pt, 0.001% Pd, 0.01% Ir, and 0.169% other additives.

The chemical analysis of the condensate was: a finely dispersed metal powder taken from the water-cooled condenser, 99.16% Ag, 0.42% Au, 0.06% Pd, and 0.36% other additives.

In 24 hours 104296 g of gold alloy were transformed. The gold ingots were forged on a pneumatic hammer into anodes and subjected to gold electrolysis, while the condensate was pressed into silver anodes on a pneumatic press and subjected to silver electrolysis.

The usable production yield is 99.93%. The loss is 0.025%.

The task concerning the inventive apparatus for the realisation of the method for separating gold-silver alloys by vacuum distillation is solved in that the apparatus comprising a high vacuum chamber 14, in which a melting crucible 1, wherein a heating element 4 in the shape of an induction coil formed with a tilting device capable of tipping over is arranged around the crucible, at least one condenser 7 with several entrainment separators 9 and an ingot mould 6 are arranged, is additionally provided with a cone head 2 arranged above the melting crucible 1 causing a directed movement of the vapour-gas mixture flow from the crucible 1 into the condensation zone, increasing the pressure of the vapour-gas mixture in accordance with the relationship:
T_{c} < Tₘ, wherein T_{c} is the condensation temperature, and Tₘ is the melting temperature of the metal to be precipitated, creating the conditions for the occurrence of a significant number of crystal nucleation centres,
is additionally provided with a restricting screen 8 arranged in the condensation zone of the vapour-gas mixture;
is additionally provided with a heat-protection screen 3 arranged between the induction coil and the crucible,
the apparatus is provided with three hemispherically shaped condensers,
the cone head is made of graphite,
the restricting screen is made of high-melting metal, for instance titanium,
the restricting screen is formed as a lid with an opening for the graphite cone head,
the heat-protection screen is made of ceramic,
pins 9 arranged in chessboard array for retaining the metal to be condensed are welded within the hemispherical condenser from its centre to the edges,
the graphite crucible is provided with a spherical bottom,
the support on which the heat-protection screen is arranged is made of ceramic,
the restricting screen which is put on the condenser from the bottom is made of titanium.

The cone head enables a strictly directed motion of the vapour-gas flow from the crucible into the condensation zone, while in the condensation zone it creates an increased pressure of the vapours, collecting part of the excess thermal energy, according to the known principle T_{c} < Tₘ, (wherein T_{c} is the condensation temperature, and Tₘ is the melting temperature of the substance to be precipitated), which enables the occurrence of a significant number of crystal nucleation centres and results in a rapid growth of consendate on the condenser.

Since the cone head is made of graphite, it does not permit overheating during induction heating and does not compromise the operational readiness of the apparatus.

The restricting screen, for instance a titanium screen placed on the condenser from the bottom has the function to ensure that the vapour flow does not escape from the boundaries of the closed space (the graphite crucible, the graphite cone head and the condenser) and to reduce the spray of the vapour flow into the chamber, which decreases the effectivity of the work of the apparatus, to a minimum.

The apparatus is provided with three condensers, which increases the performance of the device by the additional condensers.

The hemispherical shape of the condenser facilitates its servicing when the silver condensated thereon is removed.

The heat-protection screen situated between the induction coil and the crucible is arranged on a ceramic support, which decreases heat loss on the graphite crucible to a considerable degree, otherwise the condensation process of the silver on the condenser is considerably slowed down or impossible.

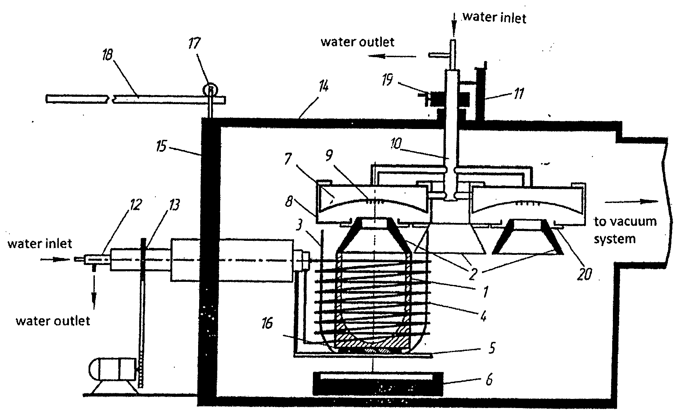

Fig. 1 shows the vacuum distillation apparatus for separating gold-silver alloys.

The vacuum distillation apparatus for separating gold-silver alloys comprises:
1. a melting crucible (evaporator)
2. a graphite cone head
3. a ceramic heat-protection screen
4. a heating element (induction coil)
5. a support on which the heat-protection screen 3 is arranged
6. a graphite ingot mould
7. a hemispherical condenser
8. a restricting screen
9. holding pins
10. a water-cooled rod
11. a device for lowering and raising the rod 10
12. a coaxial current supply
13. a tilting device capable of tipping over
14. a vacuum chamber connected to high-vacuum pumps (not shown in the drawing)
15. a door of the vacuum chamber 14
16. a ceramic support
17. a bearing roller
18. a guide rod
19. a device for moving the rod 10 around its axis
20. a fixing clamp.

The vacuum chamber 14 is connected to the high-vacuum pumps (not shown in the drawing). Inside the vacuum chamber 14 the support 5, on which the heat-protection screen 3 is arranged, is fastened to the coaxial current supply 12. The heating element 4 is formed as an induction coil whose coil is connected to the high-frequency current generator (not shown in the drawing). The melting crucible 1 is placed into the induction coil 4 on the support 16, and around it the ceramic heat-protection screen is arranged. The graphite cone head 2 is put on the graphite crucible 1 on the same vertical axis. At the top above the graphite cone head 2 the restricting titanium screen 8 and the hemispherical condenser 7 are arranged. The graphite cone head 2 is put into the restricting titanium screen 8 and fixed by ceramic fixing clamps 20.

The restricting titanium screen 8 is formed as a lid with an opening for the graphite cone head 2. The restricting titanium screen 8 sealingly abuts the hemispherical condenser 7 and is fastened to it. The holding pins (entrainment separators) 9 with Ø = 4 mm and h = 6 mm, arranged in chessboard array at a distance of 10-15 mm from each other to retain the condensed metal, are welded on the hemispherical condenser 7 within the sphere from its centre to the edges.

In the specific device according to the invention three hemispherical condensers 7 are arranged, all positioned on the same water-cooled rod 10, the rod 10 comprises a device for moving around its axis (a drive) 19 in a horizontal plane and a device 11 (a drive) for moving in the vertical plane. These hemispherical condensers 7 are arranged at 120° to each other and in the same horizontal plane. To all three hemispherical condensers 7 titanium restricting screens 8 are fastened to which the graphite cone heads 2 are fastened at the bottom by means of the fixing clamps 20.

The hemispherical condensers 7 are arranged in the same horizontal plane above the melting crucible 1.

The parameters of the graphite cone head 2 must fulfil the following requirements:
- The relation of the upper inner diameter of the graphite cone head 2 to the inner head diameter is 0.61-0.65;
- the relation of the height of the graphite cone head 2 to the inner head diameter is 0.58-0.64;
- the relation of the constant diameter at a height from the upper inner diameter of the graphite cone head 2 to the inner head diameter is 0.25-0.3.

Without the graphite cone head the silver condensation process is significantly slowed down or impossible.

The device according to the invention works as follows.

The initial material is an alloy containing gold and silver, for instance placer gold, up to 30 kg of the gold-silver alloy are fed into the graphite melting crucible (1), which is preliminarily placed into the ceramic heat-protection screen (3) on the ceramic support (16). Subsequently the door (15) of the vacuum chamber (14) is closed via the guide rod (18) by means of the rollers (17). The water-cooled rod (10) is lowered until the graphite cone head (2) sealingly abuts the graphite melting crucible (1). Subsequently a discharge in the vacuum chamber (14) is effected by means of the vacuum system (not shown in Fig. 1) to 1-6·10⁻⁴ mm of the mercury column, subsequently the high-frequency generator is switched on and through the coaxial current supply (12) voltage is applied to the water-cooled copper induction coil (4). The graphite melting crucible (1) is heated to a predetermined temperature and the vacuum distillation process is carried out. In the distillation process the highly volatile metals (silver) precipitate from the vapour phase as metal on the hemispherical condenser (7) and are retained by the pins (9).

After the predetermined process time has passed without interruption of the distillation process, the water-cooled rod (10) is raised upwards by the device (11) for moving the rod, and by means of the device (19) for moving the ingot around its axis it is moved by 120°. By means of the device (11) the rod 10 is lowered until the graphite cone head (2) sealingly abuts the graphite melting crucible (1).

After a predetermined time required for the precipitation of the silver condensate on the condenser the third condenser is also arranged.

After completion of the vacuum distillation process the rod (10) is lifted upwards by means of the tilting device (13), the crucible (1) is gradually tilted and the metal is poured into the ingot mould (6).

After cooling of the graphite melting crucible (1), air is let into the vacuum chamber (14) and the door (15) is opened by means of the rollers (17) via the guide rod (18). The fixing clamps (20) are unfastened, the silver condensate is removed from the three hemispherical condensers (7) and the three graphite cone heads (2). The gold anode is taken out of the graphite ingot mould (6), a new metal batch is placed into the graphite crucible (1), and the process is repeated.

The use of the inventive method for separating gold-silver alloys by vacuum distillation and the apparatus for the realization thereof makes it possible to increase the performance of the device, to increase the effectivity (the accuracy) of the metal separation, and to reduce the time of the process cycle by a considerable degree. The apparatus is easy in exploitation, and the vacuum distillation process is carried out without emitting any harmful and hazardous substances into the environment.

## Claims

1. Method for separating gold-silver alloys by vacuum distillation, comprising heating of an initial raw material in a high vacuum to metal evaporation temperature, evaporating and condensing the metals from the vapour-gas mixture in an area of a cooled condenser,
**characterised in that** the condensation of the metals from the vapour-gas mixture is carried out in the area of the cooled condenser, wherein the cooled condenser is a hemispherically shaped condenser (7) with several entrainment separators in a form of holding pins (9), wherein the area is additionally restricted by an installed restricting screen (8) during directed movement of the vapour-gas mixture flow from the crucible (1) into the condensation zone, which is formed by an additionally installed cone head (2) arranged above the crucible (1), increasing the pressure of the vapour-gas mixture, in accordance with the relationship:
T_{c} < Tₘ, wherein
T_{c} is the condensation temperature, and
Tₘ is the melting temperature of the metal to be precipitated,
creating the conditions for the occurrence of a significant number of crystal nucleation centres.

2. Apparatus for the realisation of the method for separating gold-silver alloys by vacuum distillation comprising a high vacuum chamber (14) in which a melting crucible (1), wherein a heating element (4) in the shape of an induction coil formed with a tilting device (13) capable of tipping over is arranged around the crucible (1), at least one cooled condenser and an ingot mould (6) are arranged,
**characterised in that** it is additionally provided with a cone head (2) arranged above the melting crucible (1) causing a directed movement of the vapour-gas mixture flow from the crucible (1) into the condensation zone, increasing the pressure of the vapour-gas mixture in accordance with the relationship:
T_{c} < Tₘ, wherein T_{c} is the condensation temperature, and Tₘ is the melting temperature of the metal to be precipitated, creating the conditions for the occurrence of a significant number of crystal nucleation centres,
is additionally provided with a restricting screen (8) arranged in the condensation zone of the vapour-gas mixture, and
is additionally provided with a heat-protection screen (3) arranged between the induction coil (4) and the crucible (1),
wherein the cooled condenser is a hemispherically shaped condenser (7) with several entrainment separators in a form of holding pins (9).

3. Vacuum distillation apparatus for separating gold-silver alloys according to claim 2, **characterised in that** the apparatus is provided with three hemispherically shaped condensers (7).

4. Vacuum distillation apparatus for separating gold-silver alloys according to claim 2, **characterised in that** the cone head (2) is made of graphite.

5. Vacuum distillation apparatus for separating gold-silver alloys according to claim 2, **characterised in that** the restricting screen (8) is made of high-melting metal, for instance titanium.

6. Vacuum distillation apparatus for separating gold-silver alloys according to claim 2, **characterised in that** the restricting screen (8) is formed as a lid with an opening for the graphite cone head (2).

7. Vacuum distillation apparatus for separating gold-silver alloys according to claim 2, **characterised in that** the heat-protection screen (3) is made of ceramic.

8. Vacuum distillation apparatus for separating gold-silver alloys according to claim 2, **characterised in that** the holding pins (9) arranged in chessboard array for retaining the metal to be condensed are welded within the hemispherical condenser (7) from its centre to the edges.

9. Vacuum distillation apparatus for separating gold-silver alloys according to claim 2, **characterised in that** the graphite crucible (1) is formed with a spherical bottom.

10. Vacuum distillation apparatus for separating gold-silver alloys according to claim 2, **characterised in that** the support on which the heat-protection screen (3) is arranged is made of ceramic.

11. Vacuum distillation apparatus for separating gold-silver alloys according to claim 2, **characterised in that** the restricting screen (8) which is put on the condenser (7) from the bottom is made of titanium.

## Patentansprüche

1. Verfahren zur Trennung von Gold-Silber-Legierungen mittels Vakuumdestillation, umfassend das Heizen eines ursprünglichen Rohstoffs in einem Hochvakuum bis zur Metallverdampfungstemperatur, das Verdampfen und Kondensieren der Metalle aus dem Dampf-Gas-Gemisch in einem Bereich eines gekühlten Kondensators,
**dadurch gekennzeichnet, dass** die Kondensation der Metalle aus dem Dampf-Gas-Gemisch in dem Bereich des gekühlten Kondensators durchgeführt wird, wobei der gekühlte Kondensator ein halbkugelförmiger Kondensator (7) mit mehreren Abscheidern in Form von Haltestiften (9) ist, wobei der Bereich zusätzlich begrenzt wird durch einen eingebauten begrenzenden Schirm (8) während der gerichteten Bewegung des Dampf-Gas-Gemisch-Flusses von dem Tiegel (1) in die Kondensationszone, die von einem oberhalb des Tiegels (1) angeordneten, zusätzlich eingebauten Kegelkopf (2) geformt wird, wobei der Druck des Dampf-Gas-Gemisches erhöht wird gemäß dem Verhältnis:
T_{c} < Tₘ, wobei
T_{c} die Kondensationstemperatur ist, und
Tₘ die Schmelztemperatur des auszuscheidenden Metalls ist,
unter Bildung der Bedingungen für das Vorkommen einer beträchtlichen Anzahl von Kristallkeimbildungszentren.

2. Vorrichtung zur Verwirklichung des Verfahrens zur Trennung von Gold-Silber-Legierungen mittels Vakuumdestillation, umfassend eine Hochvakuumkammer (14), in der ein Schmelztiegel (1), in dem ein Heizelement (4) in der Form einer mit einer kippbaren Neigevorrichtung (13) gebildeten Induktionsspule um den Tiegel (1) herum angeordnet ist, wenigstens ein gekühlter Kondensator und eine Kokille (6) angeordnet sind,
**dadurch gekennzeichnet, dass** sie zusätzlich mit einem oberhalb des Schmelztiegels (1) angeordneten Kegelkopf (2) versehen ist, der eine direkte Bewegung des Dampf-Gas-Gemisch-Flusses von dem Tiegel (1) in die Kondensationszone erzeugt, wobei der Druck des Dampf-Gas-Gemisches erhöht wird gemäß dem Verhältnis:
T_{c} < Tₘ, wobei T_{c} die Kondensationstemperatur ist, und Tₘ die Schmelztemperatur des auszuscheidenden Metalls ist, unter Bildung der Bedingungen für das Vorkommen einer beträchtlichen Anzahl von Kristallkeimbildungszentren,
zusätzlich mit einem in der Kondensationszone des Dampf-Gas-Gemisches angeordneten begrenzenden Schirm (8) versehen ist, und
zusätzlich mit einem zwischen der Induktionsspule (4) und dem Tiegel (1) angeordneten Hitzeschutzschirm (3) versehen ist,
wobei der gekühlte Kondensator ein halbkugelförmiger Kondensator (7) mit mehreren Abscheidern in Form von Haltestiften (9) ist.

3. Vakuumdestillationsvorrichtung zur Trennung von Gold-Silber-Legierungen nach Anspruch 2, **dadurch gekennzeichnet, dass** die Vorrichtung mit drei halbkugelförmigen Kondensatoren (7) versehen ist.

4. Vakuumdestillationsvorrichtung zur Trennung von Gold-Silber-Legierungen nach Anspruch 2, **dadurch gekennzeichnet, dass** der Kegelkopf (2) aus Graphit hergestellt ist.

5. Vakuumdestillationsvorrichtung zur Trennung von Gold-Silber-Legierungen nach Anspruch 2, **dadurch gekennzeichnet, dass** der begrenzende Schirm (8) aus hochschmelzendem Metall, zum Beispiel Titan, hergestellt ist.

6. Vakuumdestillationsvorrichtung zur Trennung von Gold-Silber-Legierungen nach Anspruch 2, **dadurch gekennzeichnet, dass** der begrenzende Schirm (8) als ein Deckel mit einer Öffnung für den Graphitkegelkopf (2) ausgebildet ist.

7. Vakuumdestillationsvorrichtung zur Trennung von Gold-Silber-Legierungen nach Anspruch 2, **dadurch gekennzeichnet, dass** der Hitzeschutzschirm (3) aus Keramik hergestellt ist.

8. Vakuumdestillationsvorrichtung zur Trennung von Gold-Silber-Legierungen nach Anspruch 2, **dadurch gekennzeichnet, dass** die im Schachbrettmuster angeordneten Haltestifte (9) zum Abscheiden des zu kondensierenden Metalls innerhalb des halbkugelförmigen Kondensators (7) von dessen Mitte zu den Rändern geschweißt sind.

9. Vakuumdestillationsvorrichtung zur Trennung von Gold-Silber-Legierungen nach Anspruch 2, **dadurch gekennzeichnet, dass** der Graphittiegel (1) mit einem sphärischen Boden ausgebildet ist.

10. Vakuumdestillationsvorrichtung zur Trennung von Gold-Silber-Legierungen nach Anspruch 2, **dadurch gekennzeichnet, dass** die Stütze, auf der der Hitzeschutzschirm (3) angeordnet ist, aus Keramik hergestellt ist.

11. Vakuumdestillationsvorrichtung zur Trennung von Gold-Silber-Legierungen nach Anspruch 2, **dadurch gekennzeichnet, dass** der begrenzende Schirm (8), der auf den Kondensator (7) von unten aufgesetzt wird, aus Titan hergestellt ist.

## Revendications

1. Procédé pour la séparation d'alliages or-argent par distillation sous vide, comprenant le fait de : chauffer une matière brute de départ dans un vide poussé jusqu'à la température d'évaporation du métal ; évaporer et condenser les métaux à partir du mélange vapeur-gaz dans une zone d'un condenseur refroidi ;
**caractérisé en ce que** la condensation des métaux à partir du mélange vapeur-gaz est mise en oeuvre dans la zone du condenseur refroidi ; dans lequel le condenseur refroidi représente un condenseur (7) de configuration hémisphérique comprenant plusieurs séparateurs de gouttelettes sous la forme de chevilles de retenue (9) ; dans lequel la zone est en outre restreinte par un écran de restriction monté (8) au cours du mouvement dirigé de l'écoulement du mélange vapeur-gaz à partir du creuset (1) jusque dans la zone de condensation qui est réalisée par une tête de cône (2) montée en surplus, disposée au-dessus du creuset (1) ; augmenter la pression du mélange vapeur-gaz, en respectant l'équation :
T_{c} < Tₘ, dans laquelle
T_{c} représente la température de condensation ; et
Tₘ représente la température de fusion du métal qui doit être précipité ;
en créant les conditions pour l'apparition d'un nombre significatif de centres de nucléation cristalline.

2. Appareil pour la mise en oeuvre du procédé destiné à la séparation d'alliages or-argent par distillation sous vide, comprenant une chambre (14) où règne un vide poussé, dans laquelle sont disposés un creuset de mise en fusion (1), un élément de chauffage (4), sous la forme d'une bobine à induction équipée d'un dispositif de basculement (13) capable de se renverser étant disposé autour du creuset (1), au moins un condenseur refroidi et une lingotière (6) ;
**caractérisé en ce qu'**il est en outre muni d'une tête de cône (2) disposée au-dessus du creuset de mise en fusion (1) qui déclenche un mouvement dirigé de l'écoulement du mélange vapeur-gaz à partir du creuset (1) jusque dans la zone de condensation, tout en augmentant la pression du mélange vapeur-gaz, en respectant l'équation :
Tc < Tm, dans laquelle Tc représente la température de condensation ; et Tm représente la température de fusion du métal qui doit être précipité ;
en créant les conditions pour l'apparition d'un nombre significatif de centres de nucléation cristalline ;
**en ce qu'**il est en outre muni d'un écran de restriction (8) disposé dans la zone de condensation du mélange vapeur-gaz ; et
**en ce qu'**il est en outre muni d'un écran de protection contre la chaleur (3) disposé entre la bobine à induction (4) et le creuset (1) ;
dans lequel le condenseur refroidi représente un condenseur (7) de configuration hémisphérique comprenant plusieurs séparateurs de gouttelettes sous la forme de chevilles de retenue (9).

3. Appareil de distillation sous vide destiné à la séparation d'alliages or-argent selon la revendication 2, **caractérisé en ce que** l'appareil est muni de trois condenseurs (7) de configuration hémisphérique.

4. Appareil de distillation sous vide destiné à la séparation d'alliages or-argent selon la revendication 2, **caractérisé en ce que** la tête de cône (2) est réalisée en graphite.

5. Appareil de distillation sous vide destiné à la séparation d'alliages or-argent selon la revendication 2, **caractérisé en ce que** l'écran de restriction (8) est réalisé à partir d'un métal à point de fusion élevé, par exemple en titane.

6. Appareil de distillation sous vide destiné à la séparation d'alliages or-argent selon la revendication 2, **caractérisé en ce que** l'écran de restriction (8) est réalisé sous la forme d'un couvercle comportant une ouverture pour la tête de cône en graphite (2).

7. Appareil de distillation sous vide destiné à la séparation d'alliages or-argent selon la revendication 2, **caractérisé en ce que** l'écran de protection contre la chaleur (3) est réalisé en céramique.

8. Appareil de distillation sous vide destiné à la séparation d'alliages or-argent selon la revendication 2, **caractérisé en ce que** les chevilles de retenue (9) disposées dans un arrangement du type d'un échiquier pour retenir le métal qui doit être condensé sont soudées au sein du condenseur hémisphérique (7) à partir du centre de ce dernier en direction des bords.

9. Appareil de distillation sous vide destiné à la séparation d'alliages or-argent selon la revendication 2, **caractérisé en ce que** le creuset en graphite (1) est réalisé avec une base sphérique.

10. Appareil de distillation sous vide destiné à la séparation d'alliages or-argent selon la revendication 2, **caractérisé en ce que** le support sur lequel est disposé l'écran de protection contre la chaleur (3) est réalisé en céramique.

11. Appareil de distillation sous vide destiné à la séparation d'alliages or-argent selon la revendication 2, **caractérisé en ce que** l'écran de restriction (8) qui est placé sur le condenseur (7) à partir de la base est réalisé en titane.
